(19) **Europäisches Patentamt / European Patent Office / Office européen des brevets**

(11) **EP 1 650 921 B1**

(12) **EUROPEAN PATENT SPECIFICATION**

(45) Date of publication and mention
of the grant of the patent:
**08.12.2010 Bulletin 2010/49**

(51) Int Cl.:
***H04L 27/26*** (2006.01)

(21) Application number: **05023170.3**

(22) Date of filing: **24.10.2005**

(54) **Frequency correlation based synchronization for coherent ofdm receiver**

Synchronisation in einem kohärenten OFDM Empfänger

Synchronisation dans un récepteur cohérent pour OFDM

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.10.2004 US 620725 P**
**15.06.2005 US 153105**

(43) Date of publication of application:
**26.04.2006 Bulletin 2006/17**

(73) Proprietor: **Industrial Technology Research Institute**
**Chutung, Hsinchu 310 (TW)**

(72) Inventors:
• **Chen, Ching-Yung**
**Hsinchu 310**
**Taiwan (CN)**

• **Wang, Yi-Ting**
**Zhubei City**
**Hsinchu County 302**
**Taiwan (CN)**
• **Hung, Yung-Hua**
**Hsinchu 300**
**Taiwan (CN)**

(74) Representative: **Grünecker, Kinkeldey, Stockmair & Schwanhäusser**
**Anwaltssozietät**
**Leopoldstrasse 4**
**80802 München (DE)**

(56) References cited:
**EP-A- 1 480 401**

• **SCHWOERER L ET AL: "Fast Scrattered Pilot Synchronization for DVB-T and DVB-H" INTERNATIONAL OFDM WORKSHOP, XX, XX, 24 September 2003 (2003-09-24), pages 1-5, XP002990737**

**Description**

The present invention generally relates to digital broadcasting systems. More particular, the present invention relates to frequency or time-frequency correlation-based synchronization for coherent Orthogonal Frequency Division Multiplexing (OFDM) receivers in a multi-carrier digital broadcasting system, such as Digital Video Broadcasting-Terrestrial (DVB-T), Digital Video Broadcasting-Handheld (DVB-H), and Integrated Service Digital Broadcasting-Terrestrial (ISDB-T) system.

OFDM transmission technique, being one kind of the multi-carrier modulation schemes, has been widely applied for modern high-data-rate digital communications and broadcasting due to its extreme efficacy on dealing with the multipath propagation effects. The OFDM technique has been adopted by several broadcasting systems such as Digital Audio Broadcasting (DAB), DVB-T, DVB-H and ISDB-T, and, moreover, by local area networks such as the HiperLAN/2 and IEEE 802.11 a/g/n. Specifically, the (inverse) fast Fourier transform (FFT) technique is employed in an OFDM transmission system for efficiently implementing multi-carrier modulation and demodulation.

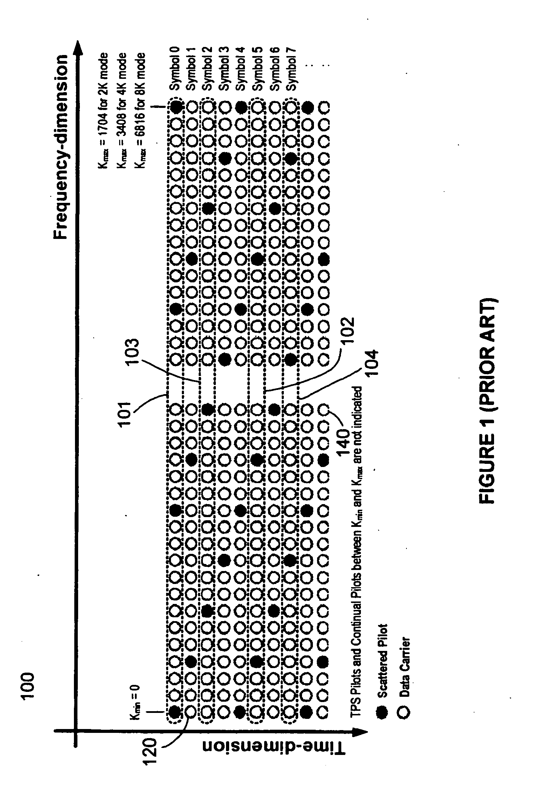

For coherent OFDM-based systems such as the DVB-T/H and ISDB-T systems, certain scattered pilots (known as SPs hereinafter) regularly posited in time- and frequency-dimensions are transmitted with predetermined known values together with information data at OFDM transmitters' end and used for channel estimation and equalization at OFDM receivers' end. Referring to Figure 1, a diagram illustrating positions of SPs defined in DVB-T/H systems with respect to the time-frequency dimension in the frequency domain is provided. The positions of SPs in DVB-T/H systems can be expressed as follows:

For the OFDM symbol of index $l$ (ranging from 0 to 67), carriers for which index $k$ belongs to the subset $\{k = K_{min} + 3 \times (l \bmod 4) + 12p \mid p \text{ integer}, p \geq 0, k \in [K_{min}, K_{max}]\}$ are SPs, wherein $p$ is an integer that takes all possible values greater than or equal to zero, provided that the resulting value for $k$ does not exceed the valid range $[K_{min}, K_{max}]$. $K_{max}$ is 1704 for the 2K mode, 3408 for the 4K mode and 6816 for the 8K mode as defined by DVB-T/H standards.

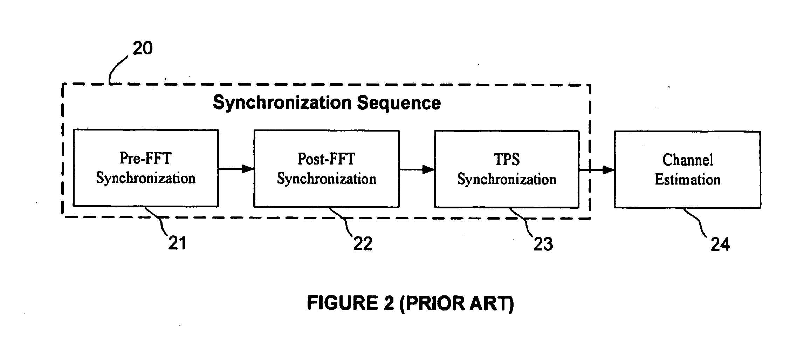

The positions of the SPs should be detected and identified by means of a synchronization sequence (or synchronization procedure) at a coherent OFDM receiver. Assume that the received Radio Frequency (RF) signal is first down converted to the baseband using a tuner and a carrier recovery loop. A typical DVB-T/H baseband synchronization sequence 20 is illustrated in Figure 2. After the start-up, pre-FFT synchronization is performed in step 21 in which all metrics are derived in time-domain from guard interval correlation. The baseband signal is then transformed to the frequency-domain through FFT. Subsequently, post-FFT synchronization is performed in frequency-domain in step 22 based on correlating the Continual Pilots (CP) of two consecutive OFDM symbols. Specifically, the pre-FFT and post-FFT synchronization blocks perform the sampling clock, OFDM symbol timing and carrier frequency synchronization.

After sampling clock, OFDM symbol timing and carrier frequency synchronization have been achieved via the pre-FFT and post-FFT synchronization, the positions of the SPs within an OFDM symbol has to be determined before channel estimation can be performed in step 24. As shown in Figure 2, Transmission Parameters Signaling (TPS) decoding procedure is utilized in step 23 which determines the positions of the SPs by detecting a frame boundary as the scattered pilot positions (known as SPPs hereinafter) are directly related to the OFDM frame. The detection of the frame boundary is so-called "frame synchronization." Typically, the frame synchronization takes a variable synchronization time of 68~136 OFDM symbols, 68~136 $T_{OFDM}$, which is around 50%~70% of the overall synchronization time associated with the total synchronization procedure 20. Thus, the conventional frame synchronization is considerably time-consuming. In particular, for DVB-H time-slicing purposes of burst-mode transmission, the receiver may prepare for the required frame synchronization time even longer than the data burst duration of interest. Therefore, the conventional frame boundary detection based SPPs identification (or SPs synchronization) scheme is especially inefficient in the sense of power reduction for receiving the time-sliced DVB-H signals.

The present invention aims to provide a synchronization on the basis of time-frequency correlation for coherent OFDM receivers in a multi-carrier digital broadcasting system, which overcomes one or more problems resulting from the limitations and disadvantages of the prior art.

This is achieved by the features of a method according to claim 1 and an apparatus according to claim 9. Embodiments of the invention are the subject matter of dependent claims.

The foregoing summary, as well as the following detailed description of the invention, will be better understood when read in conjunction with the appended drawings. For the purpose of illustrating the invention, the drawings are merely exemplary. It should be understood, however, that the invention is not limited to the precise arrangements and instrumentalities shown.

In the drawings:

Fig. 1 is a diagram illustrating positions of SPs in DVB-T/H systems;

Fig. 2 is a diagram illustrating a typical DVB-T/H synchronization sequence (or synchronization procedure);

Fig. 3 is a diagram illustrating a prior art time correlation-based SPPs identification scheme;

Fig. 4 is a diagram illustrating a prior art power-based SPPs identification scheme;

Fig. 5 is a diagram illustrating positions of SPs for explaining an embodiment in accordance with a time-frequency correlation-based scheme;

Fig. 6 is a block diagram of one example to implement the embodiment of Fig. 5;

Figs. 7A and 7B are diagrams illustrating the minimum protection ratio (MPR) associated with the time-frequency correlation-based scheme of the present invention, the conventional time correlation-based and power-based schemes upon simulation results;

Fig. 8 is a diagram illustrating positions of SPs for explaining another embodiment in accordance with a time-frequency correlation-based scheme;

Fig. 9 is a diagram illustrating positions of SPs for explaining an embodiment in accordance with a frequency correlation-based scheme;

Fig. 10 is a block diagram of one example to implement the embodiment of Fig. 9;

Fig. 11 is a diagram illustrating positions of SPs for explaining another embodiment in accordance with a frequency correlation-based scheme; and

Fig. 12 is a diagram illustrating an application of the present invention in the synchronization procedure of DVB-T/H receivers.

According to the present invention, a frequency or time-frequency correlation-based scheme that exploits frequency or time-frequency correlation characteristics of the SPs is provided for robust SP synchronization without TPS synchronization. It is to be understood that the present invention may be implemented in various forms of hardware, software, firmware, special purpose processors, or a combination thereof.

It is to be further understood that, because some of the constituent system components and method steps depicted in the accompanying figures are preferably implemented in a combination of hardware and software, the actual connections between the system components (or the process steps) may differ depending upon the manner in which the present invention is programmed. Given the teachings herein, one of ordinary skill in the related art will be able to contemplate these and similar implementations or configurations of the present invention.

For ease of presenting the concept and the methods of the present invention, let us consider the SPPs identification for the DVB-T/H systems as an example. It is to be understood that the concept and the methods of the present invention can be applied to any coherent OFDM-based systems. Referring to Fig. 1, SPPs are designated by solid circles which appear as regular position pattern. The position pattern associated with the SPPs further comprises of four sub-position patterns: 101, 102, 103 and 104 in Fig. 1, wherein each sub-position pattern in the time-dimension will repeat once for every four OFDM symbols. The four sub-position patterns 101, 102, 103 and 104 are denoted as sub-position patterns 1, 2, 3, and 4, respectively. Moreover, the SPPs shift three subcarriers in view of the frequency-dimension between two adjacent OFDM symbols, and eleven data carriers are arranged between two scattered pilots in each OFDM symbol. For ease of presentation, $R_{l,k}$ is defined as the received baseband signal on the kth sub-carrier of the lth OFDM symbol. For example, the signal in the position 120 is denoted by $R_{1,0}$ and the signal in the position 140 is denoted by $R_{9,18}$.

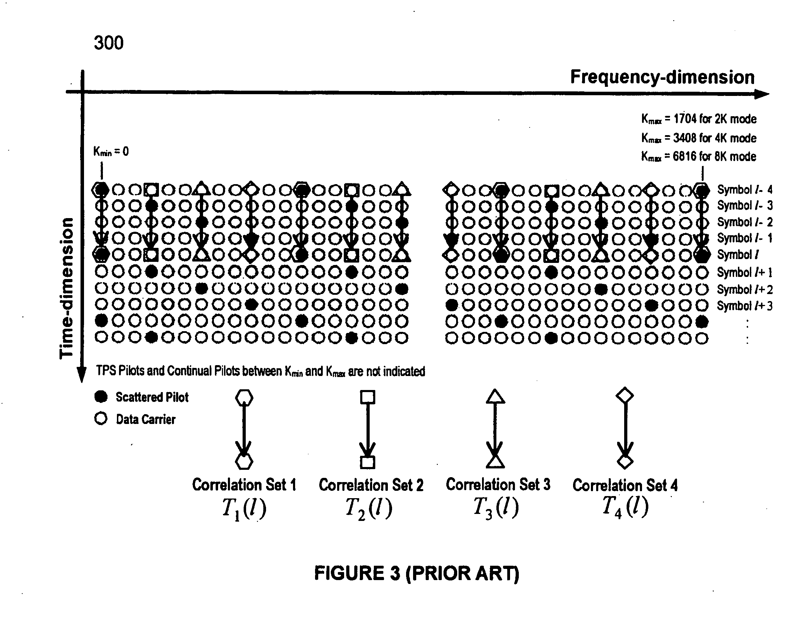

Fig. 3 is a diagram illustrating a prior art time correlation-based SPPs identification scheme as disclosed in L. Schwoerer and J. Vesma, "Fast Scattered Pilot Synchronization for DVB-T and DVB-H," *Proc. 8th International OFDM Workshop,* Hamburg, Germany, Sept. 24-25, 2003. As can be observed from Fig. 3, four sets of correlation are performed for the four possible SPPs along the time-dimension and both the current and the last fourth OFDM symbols have to be accessed for each correlation set. The four correlation sets $T_i(l)$, $i \in \{1,2,3,4\}$ are given as follows:

$$T_i(l) = \left| \sum_{p=0}^{P_{\max}} R_{l,12p+3(i-1)} \cdot R_{l-4,12p+3(i-1)}^* \right|$$

Theoretically, the SPs are correlated while the data symbols are uncorrelated. Thus, a correlation magnitude maximum is found for the sub-position pattern of the current SPP as $SPP_T(l) = \arg\max_i(T_i(l)); i \in \{1, 2, 3, 4\}$.

This approach exploits features of the SPs themselves instead of the TPS such that the time needed for SPPs identification is reduced to $5\ T_{OFDM}$. However, the time correlation-based SPPs identification scheme is quite sensitive to Doppler effects and sampling clock frequency offset (ScFO) effects.

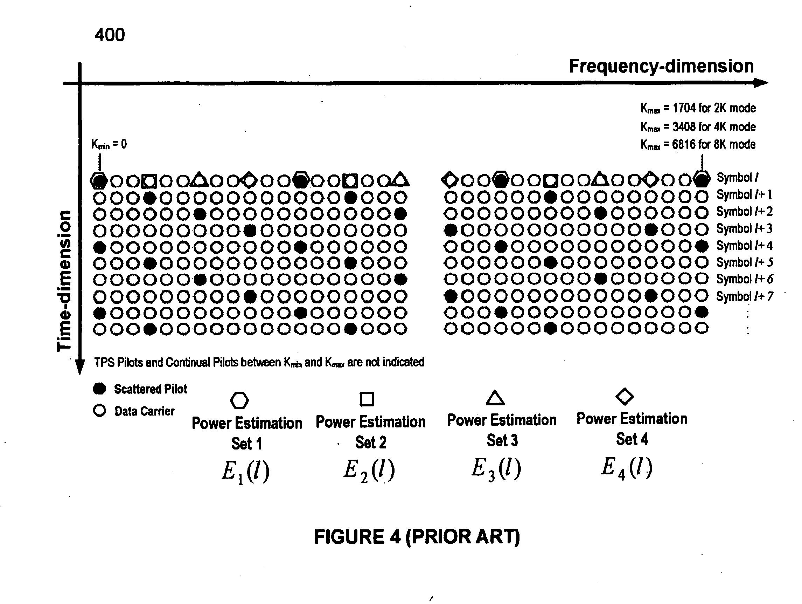

Fig. 4 is a diagram illustrating another prior art power-based SPPs identification scheme as disclosed in L. Schwoerer, "Fast Pilot Synchronization Schemes for DVB-H," Proc. Wireless and Optical Communications, Banff, Canada, July 8-10, 2004, pp. 420-424. As can be observed from Fig. 4, four sets of power estimators are performed for the four possible SPPs and only the current OFDM symbol needs to be accessed for each set of power estimators. The four power estimation sets $E_i(l)$, $i \in \{1,2,3,4\}$ are given as follows:

$$E_i(l) = \sum_{p=0}^{p_{\max}} \left| R_{l,12p+3(i-1)} \right|^2$$

Definitely, the power of SPs is higher than the data symbols. Thus, a power maximum is found for the sub-position pattern of the current SPP as $SPP_E(l) = \arg\max(E_i(l))$; $i \in \{1, 2, 3, 4\}$. This approach exploits features of the SPs themselves instead of the TPS such that the time needed for SPPs identification is reduced to 1 $T_{OFDM}$. However, the power-based SPPs identification scheme is quite sensitive to noise effects and ill-conditioned channel effects (e.g., echo in single-frequency networks (SFN)).

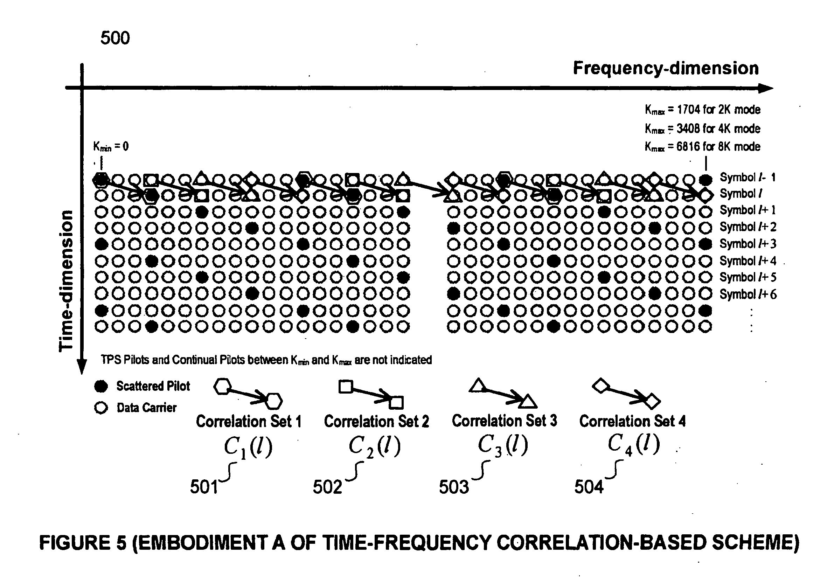

Based upon the characteristics of the SPPs above, the present invention sets forth a frequency or time-frequency correlation-based scheme for the purpose of fast and robust SPs synchronization for OFDM receivers. Referring to Fig. 5, a diagram illustrating the SPPs for explaining a time-frequency correlation-based scheme in accordance with one embodiment of the present invention is depicted schematically. As shown in Fig. 5, four correlation sets $C_1(l)$, $C_2(l)$, $C_3(l)$, $C_4(l)$ (i.e., 501, 502, 503 and 504) in view of two adjacent OFDM symbols are used for SPPs identification. The four correlation sets $C_i(l)$, $i \in \{1,2,3,4\}$ are given as follows:

$$C_1(l) = \left| \sum_{p=0}^{p_{\max}} (R_{l,12p+3} \cdot P_{12p+3}) \cdot (R^{*}_{l-1,12p} \cdot P^{*}_{12p}) \right|$$

$$C_2(l) = \left| \sum_{p=0}^{p_{\max}} (R_{l,12p+6} \cdot P_{12p+6}) \cdot (R^{*}_{l-1,12p+3} \cdot P^{*}_{12p+3}) \right|$$

$$C_3(l) = \left| \sum_{p=0}^{p_{\max}} (R_{l,12p+9} \cdot P_{12p+9}) \cdot (R^{*}_{l-1,12p+6} \cdot P^{*}_{12p+6}) \right|$$

$$C_4(l) = \left| \sum_{p=0}^{p_{\max}} (R_{l,12p+12} \cdot P_{12p+12}) \cdot (R^{*}_{l-1,12p+9} \cdot P^{*}_{12p+9}) \right|$$

wherein $P_k = \pm 1$ with $k \in S_{SP} = \{0, 3, 6, 9,..., K_{max}\}$ (a set of all subcarrier indices associated with all SPPs) is the (sign of the) value of the SP on $k$th sub-carrier defined by the DVB-T/H standard and $(p_{max}, K_{max}) = (141, 1704)$, (283, 3408) and (567, 6816) for 2K, 4K and 8K modes respectively. Note that $P_k$'s required by computing the correlation $C_i(l)$ are used for SPs compensation such that $(R_{l,k} \cdot P_k)$ and $(R_{l-1,k-3} \cdot P_{k-3})$ could be positively correlated if $R_{l,k}$ carries an SP. Then, a clear distinct correlation magnitude maximum should be found for the sub-position pattern of the current SPP as $SPP(l) = (1 + \arg\max(C_i(l))) \mod 4$; $i \in \{1, 2, 3, 4\}$.

As an example, if Symbol 0 and Symbol 1 shown in Fig. 1 are used to generate four correlations $C_1(1)$, $C_2(1)$, $C_3(1)$, $C_4(1)$, wherein Symbol 1 is the current OFDM symbol, i.e., $l = 1$. The correlation $C_1(1)$ is then greater than the other three correlations $C_2(1)$, $C_3(1)$, $C_4(1)$, and thus the current SPP correspeonds to sub-position pattern index $SPP(1) = 2$ (i.e., sub-position pattern 2). Moreover, if Symbol 1 and Symbol 2 shown in Fig. 1 are utilized to generate four correlations $C_1(2)$, $C_2(2)$, $C_3(2)$, $C_4(2)$, wherein Symbol 2 is the current OFDM symbol, i.e., $l = 2$. The correlation $C_2(2)$ is then greater than the other three correlations $C_1(2)$, $C_3(2)$, $C_4(2)$, and thus the current SPP correspeonds to sub-position pattern index $SPP(2) = 3$ (i.e., sub-position pattern 3). Furthermore, if Symbol 2 and Symbol 3 shown in Fig. 1 are utilized to generate four correlations $C_1(3)$, $C_2(3)$, $C_3(3)$, $C_4(3)$, wherein Symbol 3 is the current OFDM symbol, i.e., $l = 3$. The correlation $C_3(3)$ is then greater than the other three correlations $C_1(3)$, $C_2(3)$, $C_4(3)$, and thus the current SPP correspeonds to sub-position pattern index $SPP(3) = 4$ (i.e., sub-position pattern 4). In addition, if Symbol 3 and Symbol 4 shown in Fig. 1 are utilized to generate four correlations $C_1(4)$, $C_2(4)$, $C_3(4)$, $C_4(4)$, wherein Symbol 4 is the current OFDM symbol, i.e., $l = 4$. The correlation $C_4(4)$ is then greater than the other three correlations $C_1(4)$, $C_2(4)$, $C_3(4)$, and thus the current SPP correspeonds to a sub-position pattern index $SPP(4) = 1$ (i.e., sub-position pattern 1).

It is to be noted that, instead of accumulating all available $(p_{max}+1)$ complex values of

$(R_{l,12p+3i} \cdot P_{12p+3i}) \cdot (R^*_{l-1,12p+3(i-1)} \cdot P^*_{12p+3(i-1)})$ for $C_i(l)$, $i \in \{1,2,3,4\}$, accumulation of only partial set of complex

values of $(R_{l,12p+3i} \cdot P_{12p+3i}) \cdot (R^*_{l-1,12p+3(i-1)} \cdot P^*_{12p+3(i-1)})$ may suffice for robust SPPs identification. Therefore, the four correlation sets $C_i(l)$, $i \in \{1,2,3,4\}$ can be generalized as

$$C_i(l) = \left| \sum_{p \in Z} (R_{l,12p+3i} \cdot P_{12p+3i}) \cdot (R^*_{l-1,12p+3(i-1)} \cdot P^*_{12p+3(i-1)}) \right|$$

wherein $Z \subset \{0,1,2,...,p_{max}\}$.

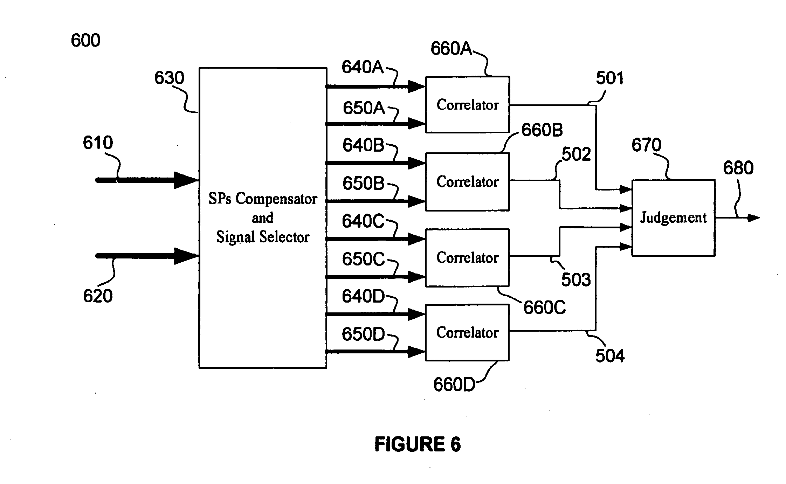

Referring to Fig. 6, a block diagram of one example to implement the time-frequency correlation-based scheme of the present invention as depicted in Fig. 5 is provided. As shown in Fig. 6, the time-frequency correlation-based scheme of the present invention basically comprises an SP compensator and signal selector 630, four correlators 660A, 660B, 660C and 660D, and a judgment or processing block 670. Signals 610 and 620 applied to the SP compensator and signal selector 630 are the received baseband signal $R_{l,k}$ from an OFDM receiver and known $P_k$ wherein $k \in S_{SP}$ =$\{0, 3, 6, 9,..., K_{max}\}$. The SP compensator and signal selector 630 is employed to obtain sub-signals 640A, 640B, 640C, 640D, 650A, 650B, 650C, and 650D, which are associated to $(R_{l,12p+3} \cdot P_{12p+3})$, $(R_{l,12p+6} \cdot P_{12p+6})$, $(R_{l,12p+9} \cdot P_{12p+9})$, $(R_{l,12p+12} \cdot P_{12p+12})$, $(R_{l-1,12p} \cdot P_{12p})$, $(R_{l-1,12p+3} \cdot P_{12p+3})$, $(R_{l-1,12p+6} \cdot P_{12p+6})$ and $(R_{l-1,12p+9} \cdot P_{12p+9})$, respectively, wherein $p \in Z \subset \{0, 1, 2,..., p_{max}\}$. Preferably, the SP compensator and signal selector 630 includes a buffer to receive the signals 610 for storing the signals of the previous OFDM symbol $l$-1. Sub-signals 640A and 650A are applied to the correlator 660A, sub-signals 640B and 650B are applied to the correlator 660B, sub-signals 640C and 650C are applied to the correlator 660C, and sub-signals 640D and 650D are applied to the correlator 660D. The correlators 660A, 660B, 660C and 660D are employed to compute four correlation set results 501, 502, 503 and 504, which are associated to the correlation sets $C_1(l)$, $C_2(l)$, $C_3(l)$ and $C_4(l)$ as depicted in Fig. 5, respectively. Preferably, the correlator 660A includes a complex conjugate function to generate the conjugate part of a signal, a complex multiplier and an accumulator, while correlators 660B, 660C and 660D can be implemented the same. Subsequently, the four correlation set results 501, 502, 503 and 504 are all supplied to a judgment or processing block 670 to determine the maximum thereof and generate a judgment or processing result 680 as $SPP(l)$ indicating the sub-position pattern exhibited by the SPs in the current $l$th OFDM symbol accordingly. Preferably, the judgment or processing unit 680 includes a peak detector or a comparator so as to determine the maximum of correlation set results 501, 502, 503 and 504. It is to be understood that, because some of the sub-signals 640A, 640B, 640C, 640D, 650A, 650B, 650C, and 650D appear in different time, one of ordinary skill in the related art such as time-sharing based hardware design will be able to obtain the four correlation set results 501, 502, 503 and 504 with only one correlator 660A.

It is to be noted that, in virtue of the fact that $(R_{l,k} \cdot P_k)$ and $(R_{l-1,k-3} \cdot P_{k-3})$ could be positively correlated if $R_{l,k}$ carries an SP, the four correlation sets $C_i(l)$, $i \in \{1,2,3,4\}$ can be further simplified as

$$C_i(l) = \left| \sum_{p \in Z} \mathrm{Re} \left\{ (R_{l,12p+3i} \cdot P_{12p+3i}) \cdot (R^*_{l-1,12p+3(i-1)} \cdot P^*_{12p+3(i-1)}) \right\} \right|$$

wherein $Z \subset \{0,1,2,...,p_{max}\}$. Therefore, instead of obtaining the result of

$(R_{l,12p+3i} \cdot P_{12p+3i}) \cdot (R^*_{l-1,12p+3(i-1)} \cdot P^*_{12p+3(i-1)})$ by a complex multiplier, only two real multipliers and one adder

suffice for computing

$$\mathrm{Re} \left\{ (R_{l,12p+3i} \cdot P_{12p+3i}) \cdot (R^*_{l-1,12p+3(i-1)} \cdot P^*_{12p+3(i-1)}) \right\} =$$
$$\mathrm{Re}\{R_{l,12p+3i} \cdot P_{12p+3i}\} \cdot \mathrm{Re}\{R_{l-1,12p+3(i-1)} \cdot P_{12p+3(i-1)}\}$$
$$+ \mathrm{Im}\{R_{l,12p+3i} \cdot P_{12p+3i}\} \cdot \mathrm{Im}\{R_{l-1,12p+3(i-1)} \cdot P_{12p+3(i-1)}\}$$

for $C_i(l)$, $i \in \{1,2,3,4\}$.

As compared with the conventional time correlation-based scheme of the required synchronization time $5T_{OFDM}$, the time-frequency correlation-based scheme of this example may require only two adjacent OFDM symbols in order to compute the correlation set results $C_1(l)$, $C_2(l)$, $C_3(l)$, $C_4(l)$ and then determine the maximum thereof to be associated with the judgment or processing result 680 indicating the correct SPPs of the current symbol. The time-frequency correlation-based scheme of this example hence benefits not only the ability of fast synchronization speed but also the robustness against Doppler effects due to less stringent requirement on the channel coherence time. In addition, the time-frequency correlation-based scheme of this example may be less sensitive to ScFO effects than the conventional time correlation-based scheme. On the other hand, as compared with the conventional power-based scheme requiring a synchronization time of $T_{OFDM}$, the time-frequency correlation-based scheme of this example may provide robustness against noise effects due to the correlation gain at the cost of slightly longer synchronization time $2T_{OFDM}$. Furthermore, another advantage of the example over both time correlation-based and power-based schemes is that the time-frequency correlation-based scheme is free from the correlation-interference caused by CP defined in DVB-T/H wherein the CP are continuously located at the same subset $S_{CP}$ of subcarriers over all OFDM symbols with $S_{CP} \subset S_{SP}$.

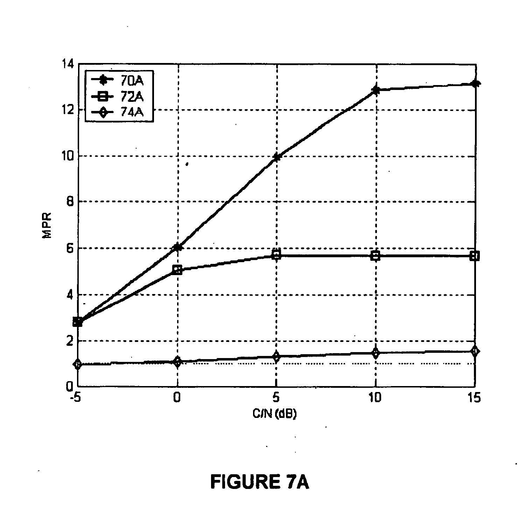

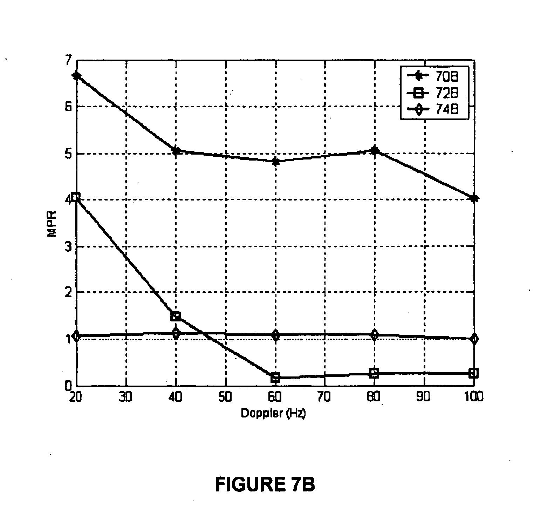

Some of the simulation results (for 8k mode in DVB-T/H with a guard interval of 1/4 useful symbol length) are shown in Figures 7A and 7B for supporting the efficacy and robustness of the time-frequency correlation-based scheme in one example. Figs. 7A and 7B plot the minimum protection ratio (MPR), a performance index used by L. Schwoerer, "Fast Pilot Synchronization Schemes for DVB-H," Proc. Wireless and Optical Communications, Banff, Canada, July 8-10, 2004, pp. 420-424. In particular, Figs. 7A and 7B are the MPR plot of an example of the time-frequency correlation-based scheme and of the conventional time correlation-based and power-based schemes over 1000 independent runs for static AWGN channel model with various carrier-to-noise ratio (C/N) and typical urban channel model with various Doppler frequencies (with C/N = 5 dB), respectively. The MPR for the time-frequency correlation-based scheme of this example is defined as

$$MPR = \min_{n}(PR(n)); \; n \in \{1, 2, ..., 1000\}$$

wherein PR(n) is the protection ratio associated with the nth independent run and is defined as

$$PR(n) = \min_{i}\left( \frac{C_{i_{true}}^{(n)}(l)}{C_i^{(n)}(l)} \right); \; i \in \{1, 2, 3, 4\} \text{ and } i \neq i_{true}$$

in which $i_{true} \in \{1,2,3,4\}$ is the sub-position pattern index corresponding to the true SPPs associated with the $l$th OFDM symbol. The MPRs for the conventional time correlation-based and power-based schemes are defined in a similar way with $C_i^{(n)}(l)$ replaced by $T_i^{(n)}(l)$ and $E_i^{(n)}(l)$, respectively. It is noted that the higher the MPR value the more robust the performance of the SPPs identification scheme, wherein MPR < 1 implies at least one erroneous detection of the SPPs exists over the 1000 independent runs.

In Figs. 7A and 7B, curves 70A and 70B are associated with the time-frequency correlation-based scheme of one example, wherein curves 72A and 72B correspond to the conventional time correlation-based scheme and curves 74A and 74b correspond to the conventional power-based scheme.

As shown in Fig. 7A, both the time-frequency correlation-based scheme of one example and the conventional time correlation-based scheme are uniformly more robust against noise effects than the conventional power-based scheme due to the correlation gain. The time-frequency correlation-based scheme in some examples may outperform the conventional time correlation-based scheme under higher C/N because the latter may suffer from the correlation-interference due to CP that dominates the performance for low noise condition. As shown in Fig. 7B, the conventional power-based scheme is as expected insensitive to Doppler effects and the time-frequency correlation-based scheme may be more robust against Doppler effects than the conventional time correlation-based scheme whose performance is significantly degraded for Doppler frequency larger than 60 Hz because the latter requires longer coherence time. In summary, the time-frequency correlation-based scheme may outperform the conventional time correlation-based and power-based schemes in view of robustness against both Doppler and noise effects.

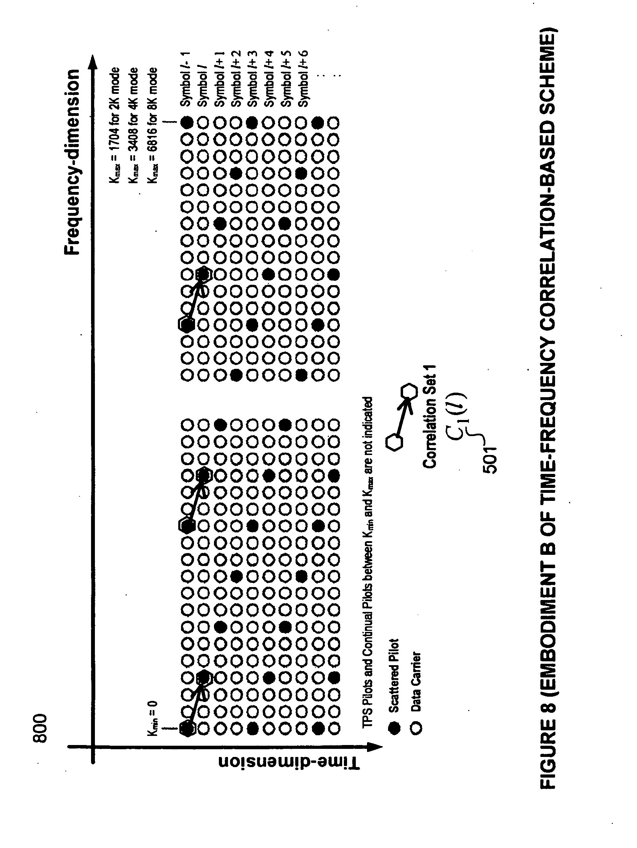

The time-frequency correlation-based scheme can further provide a flexible design for the trade-off between hardware cost and synchronization time in some examples. Referring to Fig. 8, a diagram illustrating the SPPs for explaining another embodiment in accordance with the time-frequency correlation-based scheme. As compared with the embodiment of Fig. 5, this embodiment makes use of only one correlation set, for example, $C_1(l)$, to determine the correct SPP of the current symbol. If the time-frequency correlation-based scheme of Fig. 8 is implemented in the same manner as Fig. 6, three sets of correlators 660B, 660C and 660D can be omitted with certain modification on the SPPs identification scheme. One possible modification involved is that the judgment or processing block 670 should include a detector provided with threshold detection approach so that the current SPPs are identified as sub-position pattern 2 if $C_1(l)$ is larger than a threshold value. Another possible modification is that the correlator 660A should be performed four times to obtain $C_1(l)$, $C_1(l-1)$, $C_1(l-2)$ and $C_1(l-3)$ using the $(l,l-1)$, $(l-1,l-2)$, $(l-2,l-3)$ and $(l-3,l-4)$ OFDM symbols pairs, respectively. Then, a clear distinct correlation magnitude maximum among $C_1(l)$, $C_1(l-1)$, $C_1(l-2)$ and $C_1(l-3)$ should be found by the judgment or processing block 670. Denoting $l_{max} = \arg\max_m(C_1(m))$; $m \in \{l,l-1,l-2,l-3\}$, the SPPs of the $l_{max}$ th OFDM symbol are thus identified as sub-position pattern 2. For the same reason, any combination of two or three of the correlation sets $C_1(l)$, $C_2(l)$, $C_3(l)$ and $C_4(l)$ can be used in a similar way as a direct extension of the second embodiment shown in Fig. 8 to reduce the number of the required correlators in exchange of the increased synchronization time $2\sim5T_{OFDM}$.

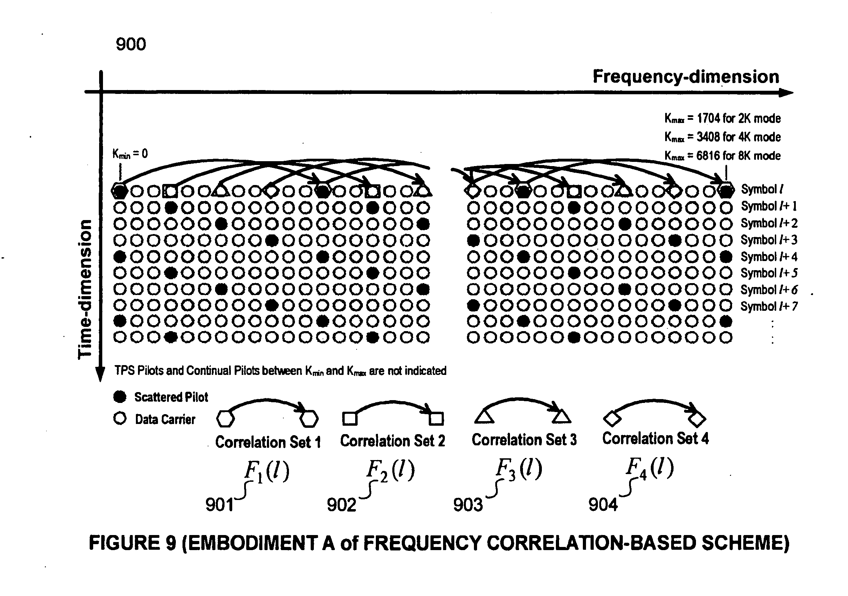

Referring to Fig. 9, in another example, a frequency correlation-based scheme may be implemented. The implementation may be based on the characteristics of the SPPs noted above and, in some examples, may be used for providing fast and robust SPs synchronization for OFDM receivers. The implementation may be used to increase the processing speed of an OFDM receiver and improve SP synchronization. Referring to Fig. 9, in an example of having one OFDM symbol, one correlation set, such as $F_1(l)$, $F_2(l)$, $F_3(l)$ and $F_4(l)$ illustrated as in Fig. 9, may be used to determine the correct SPP of the current symbol. For example, the correlation set $F_i(l)$, $i \in \{1,2,3,4\}$ may be given as:

$$F_1(l) = \left| \sum_{p=0}^{P_{max}} (R_{l,12p} \cdot P_{12p}) \cdot (R^{\bullet}_{l,12(p+1)} \cdot P^{\bullet}_{12(p+1)}) \right|$$

$$F_2(l) = \left| \sum_{p=0}^{P_{max}} (R_{l,12p+3} \cdot P_{12p+3}) \cdot (R^{\bullet}_{l,12(p+1)+3} \cdot P^{\bullet}_{12(p+1)+3}) \right|$$

$$F_3(l) = \left| \sum_{p=0}^{P_{max}} (R_{l,12p+6} \cdot P_{12p+6}) \cdot (R^{\bullet}_{l,12(p+1)+6} \cdot P^{\bullet}_{12(p+1)+6}) \right|$$

$$F_4(l) = \left| \sum_{p=0}^{P_{max}} (R_{l,12p+9} \cdot P_{12p+9}) \cdot (R^{\bullet}_{l,12(p+1)+9} \cdot P^{\bullet}_{12(p+1)+9}) \right|$$

In one example, the $P_k$'s required for computing the correlation may be used for SP compensation such that $(R_{l,k} \cdot P_k)$ and $(R_{l,k+12} \cdot P_{k+12})$ could be positively correlated if $R_{l,k}$ carries an SP. Then, a distinct correlation magnitude maximum may be found, which may correspond to the sub-position pattern of the current SPP as

$$SPP(l) = \arg\max_i(F_i(l)); i \in \{1,2,3,4\}.$$

As an example, if Symbol 0 shown in Fig. 1 is used to generate four correlations $F_1(0)$, $F_2(0)$, $F_3(0)$, $F_4(0)$, wherein Symbol 0 is the current OFDM symbol, i.e., $l = 0$. The correlation $F_1(0)$ would be greater than the other three correlations $F_2(0)$, $F_3(0)$, $F_4(0)$. Therefore, the sub-position pattern of the current SPP is $SPP(0) = 1$ (sub-position pattern 1). Moreover, if Symbol 1 shown in Fig. 1 is used to generate four correlations $F_1(1)$, $F_2(1)$, $F_3(1)$, $F_4(1)$, wherein Symbol 1 is the current OFDM symbol, i.e., $l = 1$. The correlation $F_2(1)$ would be then greater than the other three correlations $F_1(1)$, $F_3(1)$, $F_4(1)$, and therefore corresponds to sub-position pattern of the current SPP $SPP(1) = 2$ (sub-position pattern 2). Furthermore, if Symbol 2 shown in Fig. 1 is used to generate four correlations $F_1(2)$, $F_2(2)$, $F_3(2)$, $F_4(2)$, wherein Symbol 2 is the current OFDM symbol, i.e., $l = 2$. The correlation $F_3(2)$ would be greater than the other three correlations $F_1(2)$, $F_2(2)$, $F_4(2)$, and therefore corresponds to sub-position pattern of the current SPP $SPP(2) = 3$ (sub-position pattern 3). Similarly, if Symbol 3 shown in Fig. 1 is used to generate four correlations $F_1(3)$, $F_2(3)$, $F_3(3)$, $F_4(3)$, wherein Symbol

3 is the current OFDM symbol, i.e., $l=3$. The correlation $F_4(3)$ would be greater than the other three correlations $F_1(3)$, $F_2(3)$, $F_3(3)$), and therefore corresponds to sub-position pattern of the current SPP $SPP(3) = 4$ (sub-position pattern 4).

It is to be noted that, instead of accumulating all available $(P_{max+1})$ complex values of $(R_{l,12p} \cdot P_{12p}) \cdot (R^{\bullet}_{l,12(p+1)+3(i-1)} \cdot P^{\bullet}_{12(p+1)+3(i-1)})$ for $F_i(l)$, $i \in \{1,2,3,4\}$, accumulation of only partial set of complex values of $(R_{l,12p} \cdot P_{12p}) \cdot (R^{\bullet}_{l,12(p+1)+3(i-1)} \cdot P^{\bullet}_{12(p+1)+3(i-1)})$ may suffice for providing robust SPPs identification. Therefore, the four correlation sets $F_i(l)$, $i \in \{1,2,3,4\}$ can be generalized as

$$F_i(l) = \left| \sum_{p \in Z} (R_{l,12p} \cdot P_{12p}) \cdot (R^{\bullet}_{l,12(p+1)+3(i-1)} \cdot P^{\bullet}_{12(p+1)+3(i-1)}) \right| ,$$

wherein $Z \subset \{0,1,2,...,p_{max}\}$

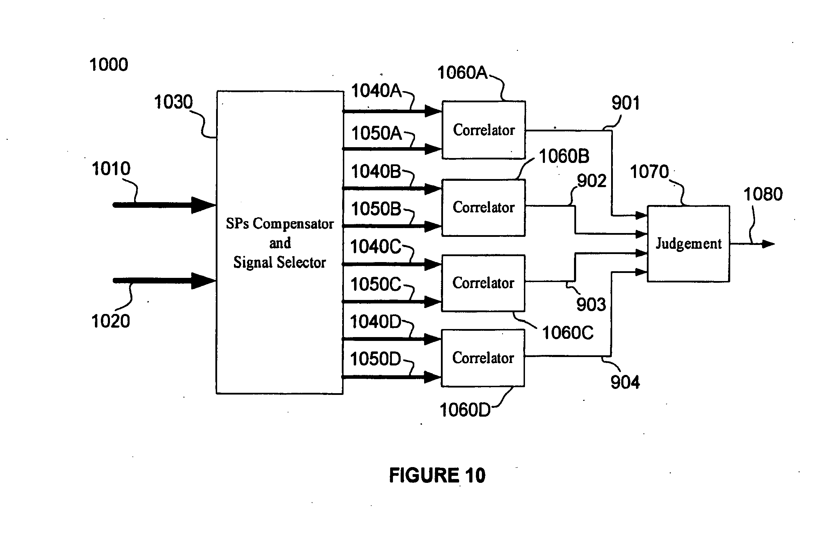

The block diagram of Fig. 6 may be applicable to the exemplary implementation described in Fig. 9 and above paragraphs. Fig. 10 illustrates an exemplary block diagram for implementing a frequency correlation-based scheme. Referring to Fig. 10, the frequency correlation-based scheme may include an SP compensator and signal selector 1030, four correlators 1060A, 1060B, 1060C and 1060D, and a judgment or processing block 1070. Signals 1010 and 1020 applied to the SP compensator and signal selector 1030 are the received baseband signal $R_{l,k}$ from an OFDM receiver with known $P_k$ wherein $k \in S_{SP}=\{0, 3, 6, 9,..., K_{max}\}$. The SP compensator and signal selector 1030 may be employed to obtain sub-signals 1040A, 1040B, 1040C, 1040D, and 1050D, which are associated to $(R_{l,12p} \cdot P_{12p})$, $(R_{l,12p+3} \cdot P_{12p+3})$, $(R_{l,12p+6} \cdot P_{12p+6})$, $(R_{l,12p+9} \cdot P_{12p+9})$, $(R_{l,12(p+1)} \cdot P_{12(p+1)})$, $(R_{l,12(p+1)+3} \cdot P_{12(p+1)+3})$, $(R_{l,12(p+1)+6} \cdot P_{12(p+1)+6})$, and $(R_{l,12(p+1)+9} \cdot P_{12(p+1)+9})$, wherein $p \in Z \subset \{0,1, 2,...,p_{max}\}$. In one example, sub-signal 1040A and 1050A may be applied to correlator 1060A; sub-signal 1040B and 1050B may be applied to correlator 1060B; sub-signal 1040C and 1050C may be applied to correlator 1060C; sub-signal 1040D and 1050D may be applied to correlator 1060D.

Correlators 1060A, 1060B, 1060C and 1060D may be used to compute four correlation set results 901, 902, 903 and 904, which are respectively correlated to correlation sets $F_1(l)$, $F_2(l)$, $F_3(l)$ and $F_4(l)$ illustrated in Fig. 9. In one example, correlator 660A may include a complex conjugate function to generate the conjugate part of a signal, a complex multiplier, and an accumulator, and correlators 660B, 660C and 660D may be implemented in the same or similar manner. Subsequently, four correlation set results 901, 902, 903 and 904 may be submitted to judgment or processing block 1070 to determine the maximum among them and generate a judgment or processing result 1080 as $SPP(l)$, which may indicate the sub-position pattern of the SP for the current $l$th OFDM symbol accordingly.

In one example, the judgment or processing unit 1080 may include a peak detector or a comparator so as to determine the maximum of correlation set results 901, 902, 903 and 904. It is noted that some of the sub-signals 1040A, 1040B, 1040C, 1040D, 1050A, 1050B, 1050C, and 1050D may appear at different times. Accordingly, one of ordinary skill in the related art, such as in the field of time-sharing or resource-sharing hardware design, may be able obtain the four correlation set results 901, 902, 903 and 904 with a less number of correlators, such as with only one correlator 1060A.

It is to be noted that, due to the fact that $(R_{l,k} \cdot P_k)$ and $(R_{l,k+12} \cdot P_{k+12})$ could be positively correlated if $R_{l,k}$ carries an SP, the four correlation sets $F_i(l)$, $i \in \{1,2,3,4\}$ can be simplified as

$$F_i(l) = \left| \sum_{p \in Z} \mathbf{Re}\left\{(R_{l,12p} \cdot P_{12p}) \cdot (R^{\bullet}_{l,12(p+1)+3(i-1)} \cdot P^{\bullet}_{12(p+1)+3(i-1)})\right\} \right|$$

wherein $Z \subset \{0,1,2,...,p_{max}\}$. Therefore, instead of obtaining the result of

$(R_{l,12p} \cdot P_{12p}) \cdot (R^{\bullet}_{l,12(p+1)+3(i-1)} \cdot P^{\bullet}_{12(p+1)+3(i-1)})$ by a complex multiplier, only two real-number multipliers and one adder are sufficient for computing

$$\mathrm{Re}\left\{(R_{l,12p}\cdot P_{12p})\cdot(R^{\bullet}_{l,12(p+1)+3(i-1)}\cdot P^{\bullet}_{12(p+1)+3(i-1)})\right\}=$$
$$\mathrm{Re}\{R_{l,12p}\cdot P_{12p}\}\cdot\mathrm{Re}\{R_{l,12(p+1)+3(i-1)}\cdot P_{12(p+1)+3(i-1)}\}$$
$$+\mathrm{Im}\{R_{l,12p}\cdot P_{12p}\}\cdot\mathrm{Im}\{R_{l,12(p+1)+3(i-1)}\cdot P_{12(p+1)+3(i-1)}\}$$

for $F_i(l)$, $i \in \{1,2,3,4\}$.

As compared with the conventional time correlation-based scheme of the required synchronization time $5T_{OFDM}$, the frequency correlation-based scheme in these examples requires only one OFDM symbol in order to compute the correlation set results $F_1(l)$, $F_2(l)$, $F_3(l)$, $F_4(l)$ and determine the maximum of the results. The judgment or processing result 1080 may identify the correct SPPs of the current symbol. Accordingly, a frequency correlation-based scheme may improve the ability of fast synchronization speed and/or improve the robustness against Doppler effects due to a less stringent requirement on the channel coherence time. In addition, a frequency correlation-based scheme may be less sensitive to ScFO effects when compared with conventional time correlation-based schemes. In some examples, when compared with the conventional power-based scheme of the required synchronization time $T_{OFDM}$, the frequency correlation-based scheme may provide robustness against noise effects due to the correlation gain at the cost of slightly longer synchronization time $2T_{OFDM}$. Furthermore, a frequency correlation-based scheme may be free from the correlation-interference caused by CP defined in DVB-T/H.

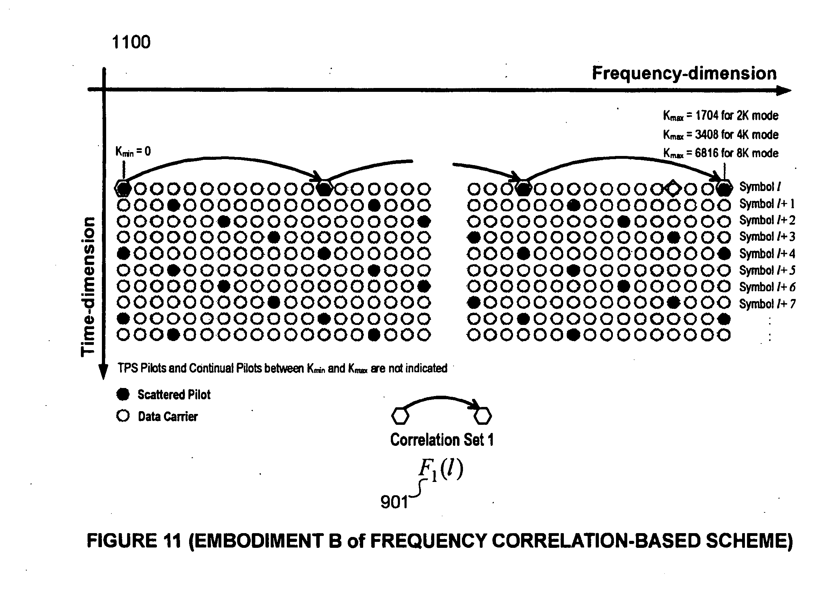

The frequency correlation-based scheme noted in the examples above may provide a flexible design taking into consideration of both hardware cost and synchronization time. Fig. 11 illustrates another example of implementing a frequency correlation-based scheme. Referring to Fig. 11, this example uses only one correlation, such as F1(I) to determine the correct SPP of a current symbol. When the design illustrated in Fig. 10 is used for such implementation, the SPP identification components may be modified to remove three correlators 1060B, 1060C, and 1060D. One example is to have judgment or processing block 1070 include a threshold value detecting device, such that when F1 (I) is larger than a certain threshold, the current SPP may be identified as sub-position pattern 1. Another example is to execute correlator 660A for four times in order to use the *l*th, *l-1*th, *l-2*th, and *l-3*th OFDM symbols to respectively obtain F1(I), F1(I-1), F1(I-2), and F1(I-3). Thereafter, judgment or processing block 1070 may uncover a distinct maximum of correlation magnitude, which may be labeled as $l_{max}$ = arg max(Fl (m)); $m \in \{l, l-1, l-2, l-3\}$, and the SPP of the $l_{max}$ th OFDM symbol are thus identified as sub-position pattern 1. Applying the technique noted here, any combination of two or three of the correlation sets $F_1(l)$, $F_2(l)$, $F_3(l)$ and $F_4(l)$ can be used in a similar way as a variation of the examples in Fig. 11 to reduce the number of correlators required with increased synchronization time of 1~4 $T_{OFDM}$.

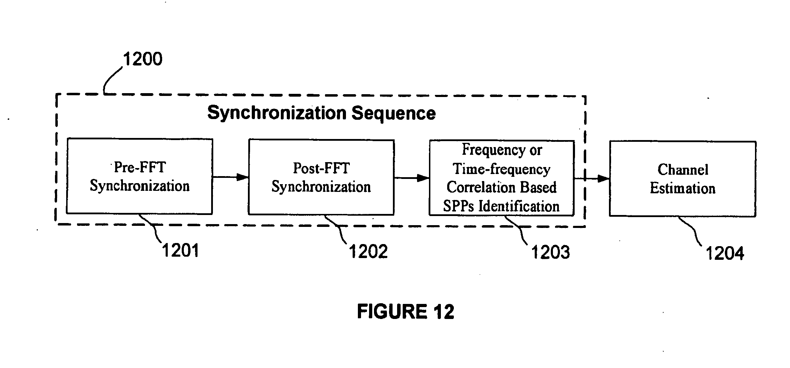

Fig. 12 is a diagram illustrating an application of the present invention in the synchronization procedure of DVB-T/H receivers. Compared to the typical DVB-T/H synchronization sequence shown in Fig. 2, SPPs required by channel estimation are identified through the present invention without TPS synchronization.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the scope of the present invention as defined by the appended claims.

Further, in describing representative embodiments, the specification may have presented the method and/or process of the present invention as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process of the present invention should not be limited to the performance of their steps in the order written, and one skilled in the art can readily appreciate that the sequences may be varied and still remain within the scope of the present invention.

**Claims**

1. A method for synchronizing scattered pilots contained in symbols received by a receiver in a multicarrier transmission system, the scattered pilots having predetermined known values, being posited among data carriers and having a predetermined position pattern in the time and frequency dimensions, wherein the predetermined position pattern comprising a finite number of sub-position patterns each corresponding to positions of scattered pilots contained in one of the symbols, the method comprising the steps of
   determining at least one correlation set (501, 502, 503, 504) between two sub-carriers of two symbols in response to the sub-position patterns;
generating a correlation set result in response to each said correlation set (501, 502, 503, 504); and
determining positions of the pilots in said time and frequency dimensions in response to the correlation set results;
**characterized in that**
each said correlation set (501, 502, 503, 504) is determined in both of the time and frequency dimensions between two sub-carriers of two adjacent symbols.

2. The method of claim 1, wherein the step of determining at least one correlation set (501, 502, 503, 504) comprises the step of selecting at least one set of signal values in the time and frequency dimensions of the received symbols in response to the sub-position pattern.

3. The method of claim 1 or 2, wherein the step of generating a correlation set result further comprises the steps of:

   storing a set of signal values for the previous symbol, wherein each signal value is generated by multiplying a signal in a sub-carrier by the corresponding predetermined known value of pilot, and the sub-carrier is one of the positions of pilots and the data carriers;
   generating a set of signal values for the current symbol, wherein each signal value is generated by multiplying a signal in a sub-carrier by the corresponding predetermined known value of pilot, and the sub-carrier is one of the positions of pilots and the data carriers; and
   generating the correlation set result by computing the absolute value of the inner product of the set of signal values for the previous symbol and the set of signal values for the current symbol in response to the determined correlation set.

4. The method of claim 1 or 2, wherein the step of generating a correlation set result further comprises the steps of:

   storing a set of signal values for the previous symbol, wherein each signal value is generated by multiplying a signal in a sub-carrier by the corresponding predetermined known value of pilot, and the sub-carrier is one of the positions of pilots and the data carriers;
   generating a set of signal values for the current symbol, wherein each signal value is generated by multiplying a signal in a sub-carrier by the corresponding predetermined known value of pilot, and the sub-carrier is one of the positions of pilots and the data carriers; and
   generating the correlation set result by computing the absolute value of the real part of the inner product of the set of signal values for the previous symbol and the set of signal values for the current symbol in response to the determined correlation set.

5. The method of any of claims 1 to 4, further comprising the step of determining a maximum of the correlation set results as a plurality of the correlation set results are generated.

6. The method of claim 5, wherein the positions of the pilots of current symbol are determined as the sub-position pattern corresponding to the correlation set with the maximum correlation set result.

7. The method of any of claims 1 to 4, further comprising:

   setting a threshold value; and
   determining whether the correlation set result is greater than the threshold value.

8. The method of claim 7, wherein the positions of the pilots of the current symbol are determined as the sub-position pattern corresponding to the correlation set with the correlation set result being greater than the threshold value.

9. An apparatus for synchronizing scattered pilots contained in symbols received by a receiver in a multicarrier transmission system, the scattered pilots having predetermined known values and being posited among data carriers and having a predetermined position pattern in the time and frequency dimensions, wherein the predetermined position pattern comprising a finite number of sub-position patterns each corresponding to positions of scattered pilots contained in one of the symbols, the apparatus comprising:

   a pilots compensator and a signal selector (630) for determining the at least one correlation set (501, 502, 503, 504) between two sub-carriers of two symbols in response to the sub-position patterns;
   a correlator (660A, 660B, 660C, 660D) for generating one correlation set result for each said correlation set (501, 502, 503, 504); and

a processing unit (670) for determining positions of the pilots in response to the correlation set result;
**characterized in that**

each said correlation set (501, 502, 503, 504) is determined in both of the time and frequency dimensions between two subcarriers of two adjacent symbols.

**10.** The apparatus of claim 9, wherein the pilots compensator (630) comprises a multiplier for generating a signal value that is the product of a signal in a sub-carrier of one symbol multiplied by corresponding the predetermined known value of pilot, and the sub-carrier is one of the positions of pilots and the data carriers.

**11.** The apparatus of claim 10, wherein the signal selector (630) comprises a buffer for storing a set of the signal values for the previous symbol and a set of the signal values for the current symbol.

**12.** The apparatus of claim 11, wherein the correlator (660A, 660B, 660C, 660D) comprises:

a complex conjugate unit for generating conjugates of the set of signal values for the previous symbol;

a complex multiplier for generating products of the conjugate of the set of signal values for the previous symbol and the set of signal values for the current symbol; and

an accumulator for generating the correlation set result by accumulating the products in response to the correlation set followed by taking the absolute value of the accumulation result.

**13.** The apparatus of claim 11, wherein the correlator (660A, 660B, 660C, 660D) comprises:

a real multiplier for generating real part products of real parts of the set of signal values for the previous symbol and real parts of the set of signal values for the current symbol;

a real multiplier for generating imaginary products of imaginary parts of the set of signal values for the previous symbol and imaginary parts of the set of signal values for the current symbol; and

an accumulator for generating the correlation set result by accumulating the real part products and the imaginary part products in response to the correlation set followed by taking the absolute value of the accumulation result.

**14.** The apparatus of any of claims 9 to 13, wherein the processing unit (670) comprise a comparator for determining a maximum of the correlation set results as a plurality of the correlation set results are generated.

**15.** The apparatus of claim 14, wherein the positions of the pilots of current symbol are determined by the processing unit as the sub-position pattern corresponding to correlation set with the maximum correlation set result.

**16.** The apparatus of any of claims 9 to 13, wherein the processing unit (670) comprises a threshold detector for determining whether the correlation set result is greater than a predetermined threshold.

**17.** The apparatus of claim 16, wherein the positions of the pilots of current symbol are determined by the processing unit (670) as the sub-position pattern corresponding to correlation set with the correlation set result being greater than the predetermined threshold.

**Patentansprüche**

**1.** Verfahren zum Synchronisieren gestreuter Piloten, enthalten in von einem Empfänger in einem Mehrträger-Übertragungssystem empfangenen Symbolen, wobei die gestreuten Piloten vorbestimmte bekannte Werte haben, unter Datenträgern positioniert sind und ein vorbestimmtes Positionsmuster in den Dimensionen Zeit und Frequenz haben, wobei das vorbestimmte Positionsmuster eine endliche Zahl von Unter-Positions-Mustern umfasst, deren jedes Positionen von in einem der Symbole enthaltenen gestreuten Piloten entspricht, wobei das Verfahren die Schritte umfasst:

Bestimmen wenigstens eines Korrelationssatzes (501, 502, 503, 504) zwischen zwei Unterträgern zweier Symbole in Reaktion auf die Unter-Positions-Muster;

Erzeugen eines Korrelationssatzergebnisses in Reaktion auf jeden dieser Korrelationssätze (501, 502, 503, 504); und

Bestimmen von Positionen der Piloten in den Dimensionen Zeit und Frequenz in Reaktion auf die Korrelationssatzergebnisse;
**dadurch gekennzeichnet, dass**
jeder der Korrelationssätze (501, 502, 503, 504) in beiden der Dimensionen Zeit und Frequenz zwischen zwei Unterträgern zweier benachbarter Symbole bestimmt wird.

2. Verfahren nach Anspruch 1, wobei der Schritt des Bestimmens wenigstens eines Korrelationssatzes (501, 502, 503, 504) den Schritt des Auswählens wenigstens eines Satzes von Signalwerten der empfangenen Symbole in den Dimensionen Zeit und Frequenz in Reaktion auf das Unter-Positionsmuster umfasst.

3. Verfahren nach Anspruch 1 oder 2, wobei der Schritt des Erzeugens eines Korrelationssatzergebnisses weiterhin die Schritte umfasst:

   Speichern eines Satzes von Signalwerten für das vorhergehende Symbol, wobei jeder Signalwert durch Multiplizieren eines Signals in einem Unterträger mit dem entsprechenden vorbestimmten bekannten Pilotwert erzeugt wird, und der Unterträger eine der Positionen der Piloten und der Datenträger ist;
   Erzeugen eines Satzes von Signalwerten für das aktuelle Symbol, wobei jeder Signalwert durch Multiplizieren eines Signals in einem Unterträger mit dem entsprechenden vorbestimmten bekannten Pilotwert erzeugt wird, und der Unterträger eine der Positionen der Piloten und der Datenträger ist;
   Erzeugen des Korrelationssatzergebnisses durch Berechnen des absoluten Betrages des inneren Produkts des Satzes von Signalwerten für das vorhergehende Symbol und des Satzes von Signalwerten für das aktuelle Symbol in Reaktion auf den bestimmten Korrelationssatz.

4. Verfahren nach Anspruch 1 oder 2, wobei der Schritt des Erzeugens eines Korrelationssatzergebnisses weiterhin die Schritte umfasst:

   Speichern eines Satzes von Signalwerten für das vorhergehende Symbol, wobei jeder Signalwert durch Multiplizieren eines Signals in einem Unterträger mit dem entsprechenden vorbestimmten bekannten Pilotwert erzeugt wird, und der Unterträger eine der Positionen der Piloten und der Datenträger ist;
   Erzeugen eines Satzes von Signalwerten für das aktuelle Symbol, wobei jeder Signalwert durch Multiplizieren eines Signals in einem Unterträger mit dem entsprechenden vorbestimmten bekannten Pilotwert erzeugt wird, und der Unterträger eine der Positionen der Piloten und der Datenträger ist;
   Erzeugen des Korrelationssatzergebnisses durch Berechnen des absoluten Betrages des Realteils des inneren Produkts des Satzes von Signalwerten für das vorhergehende Symbol und des Satzes von Signalwerten für das aktuelle Symbol in Reaktion auf den bestimmten Korrelationssatz.

5. Verfahren nach einem der Ansprüche 1 bis 4, weiterhin umfassend den Schritt des Bestimmens eines Maximums der Korrelationssatzergebnisse, wenn eine Mehrzahl der Korrelationssatzergebnisse erzeugt wird.

6. Verfahren nach Anspruch 5, wobei die Positionen der Piloten des aktuellen Symbols als das Unter-Positions-Muster bestimmt werden, das dem Korrelationssatz mit dem maximalen Korrelationssatzergebnis entspricht.

7. Verfahren nach einem der Ansprüche 1 bis 4, weiterhin umfassend:

   Festsetzen eines Schwellenwertes; und
   Bestimmen, ob das Korrelationssatzergebnis größer als der Schwellenwert ist.

8. Verfahren nach Anspruch 7, wobei die Positionen der Piloten des aktuellen Symbols als das Unter-Positions-Muster bestimmt werden, das dem Korrelationssatz entspricht, dessen Korrelationssatzergebnis größer ist als der Schwellenwert.

9. Vorrichtung zum Synchronisieren gestreuter Piloten, die in von einem Empfänger in einem Mehrträger-Übertragungssystem empfangenen Symbolen enthalten sind, wobei die gestreuten Piloten vorbestimmte bekannte Werte haben und unter Datenträgern positioniert sind und ein vorbestimmtes Positionsmuster in den Dimensionen Zeit und Frequenz haben, wobei das vorbestimmte Positionsmuster eine endliche Zahl von Unter-Positions-Mustern umfasst, deren jedes Positionen von in einem der Symbole enthaltenen gestreuten Piloten entspricht, wobei die Vorrichtung umfasst:

   einen Pilotenkompensator und einen Signalselektor (630) zum Bestimmen des wenigstens einen Korrelationssatzes (501, 502, 503, 504) zwischen zwei Unterträgern zweier Symbole in Reaktion auf die Unter-Positions-Muster;

einen Korrelator (660A, 660B, 660C, 660D) zum Erzeugen eines Korrelationssatzergebnisses für jeden dieser Korrelationssätze (501, 502, 503, 504); und

eine Verarbeitungseinheit (670) zum Bestimmen von Positionen der Piloten in Reaktion auf das Korrelationssatzergebnis;

**dadurch gekennzeichnet, dass**

jeder der Korrelationssätze (501, 502, 503, 504) in beiden der Dimensionen Zeit und Frequenz zwischen zwei Unterträgern zweier benachbarter Symbole bestimmt wird.

10. Vorrichtung nach Anspruch 9, wobei der Pilotenkompensator (630) einen Multiplikator zum Erzeugen eines Signalwertes umfasst, der das Produkt eines Signals in einem Unterträger eines Symbols, multipliziert mit dem vorbestimmten bekannten Pilotwert entsprechend, und der Unterträger eine der Positionen der Piloten und der Datenträger ist.

11. Vorrichtung nach Anspruch 10, wobei der Signalselektor (630) einen Buffer zum Speichern eines Satzes der Signalwerte für das vorhergehende Symbol und eines Satzes der Signalwerte für das aktuelle Symbol umfasst.

12. Vorrichtung nach Anspruch 11, wobei der Korrelator (660A, 660B, 660C, 660D) umfasst:

eine komplexe Konjugationseinheit zum Erzeugen konjugierter Werte des Satzes von Signalwerten für das vorhergehende Symbol;

einen komplexen Multiplikator für das Erzeugen von Produkten der konjugierten Werte des Satzes von Signalwerten für das vorhergehende Symbol und des Satzes von Signalwerten für das aktuelle Symbol; und

einen Akkumulator zum Erzeugen des Korrelationssatzergebnisses durch Akkumulieren der Produkte in Reaktion auf den Korrelationssatz, gefolgt vom Ermitteln des absoluten Betrages des Akkumulationsergebnisses.

13. Vorrichtung nach Anspruch 11, wobei der Korrelator (660A, 660B, 660C, 660D) umfasst:

einen reellen Multiplikator zum Erzeugen von Realteilprodukten von Realteilen des Satzes von Signalwerten für das vorhergehende Symbol und Realteilen des Satzes von Signalwerten für das aktuelle Symbol;

einen reellen Multiplikator zum Erzeugen imaginärer Produkte von Imaginärteilen des Satzes von Signalwerten für das vorhergehende Symbol und Imaginärteilen des Satzes von Signalwerten für das aktuelle Symbol; und

einen Akkumulator zum Erzeugen des Korrelationssatzergebnisses durch Akkumulieren der Realteilprodukte und der Imaginärteilprodukte in Reaktion auf das Korrelationssatzergebnis, gefolgt vom Ermitteln des absoluten Betrages des Akkumulationsergebnisses.

14. Vorrichtung nach einem der Ansprüche 9 bis 13, wobei die Verarbeitungseinheit (670) einen Komparator zum Bestimmen eines Maximums der Korrelationssatzergebnisse, wenn eine Mehrzahl der Korrelationssatzergebnisse erzeugt wird, umfasst.

15. Vorrichtung nach Anspruch 14, wobei die Positionen der Piloten vom aktuellen Symbol durch die Verarbeitungseinheit als das Unter-Positions-Muster bestimmt werden, das dem Korrelationssatz mit dem maximalen Korrelationssatzergebnis entspricht.

16. Vorrichtung nach einem der Ansprüche 9 bis 13, wobei die Verarbeitungseinheit (670) einen Schwellendetektor zum Bestimmen, ob das Korrelationssatzergebnis größer ist, als eine vorbestimmte Schwelle, umfasst.

17. Vorrichtung nach Anspruch 16, wobei die Positionen der Piloten vom aktuellen Symbol durch die Verarbeitungseinheit (670) als das Unter-Positions-Muster bestimmt werden, das dem Korrelationssatz entspricht, dessen Korrelationssatzergebnis größer ist, als die vorbestimmte Schwelle.

## Revendications

1. Procédé pour synchroniser des pilotes dispersés contenus dans des symboles reçus par un récepteur dans un système de transmission à porteuses multiples, les pilotes dispersés ayant des valeurs connues prédéterminées, étant pris comme postulats parmi des supports de données et ayant un modèle de position prédéterminé, par ses dimensions de temps et de fréquence, le modèle de position prédéterminé comprenant un nombre fini de modèles de sous-position correspondant chacun à des positions de pilotes dispersés contenus dans l'un des symboles, le procédé comprenant les étapes qui consistent

à déterminer au moins un ensemble de corrélation (501, 502, 503, 504) entre deux sous-porteuses de deux symboles en réponse aux modèles de sous-position ;

à générer un résultat d'ensemble de corrélation en réponse à chaque ensemble de corrélation (501, 502, 503, 504) ; et

à déterminer les positions des pilotes dans les dimensions de temps et de fréquence en réponse aux résultats d'ensemble de corrélation ;

**caractérisé en ce que** chaque ensemble de corrélation (501, 502, 503, 504) est déterminé à la fois dans les dimensions de temps et de fréquence entre deux sous-porteuses de deux symboles adjacents.

2. Procédé de la revendication 1, selon lequel l'étape qui consiste à déterminer au moins un ensemble de corrélation (501, 502, 503, 504) comprend la sélection d'au moins un ensemble de valeurs de signaux dans les dimensions de temps et de fréquence des symboles reçus, en réponse au modèle de sous-position.

3. Procédé de la revendication 1 ou 2, selon lequel l'étape qui consiste à générer un résultat d'ensemble de corrélation comprend également les étapes qui consistent :

à stocker un ensemble de valeurs de signaux pour le symbole précédent, chaque valeur de signal étant générée par la multiplication d'un signal dans une sous-porteuse par la valeur de pilote connue prédéterminée correspondante, et la sous-porteuse est l'une des positions de pilotes et des supports de données ;

à générer un ensemble de valeurs de signaux pour le symbole actuel, chaque valeur de signal étant générée par la multiplication d'un signal dans une sous-porteuse par la valeur de pilote connue prédéterminée correspondante, et la sous-porteuse est l'une des positions de pilotes et des supports de données ; et

à générer le résultat d'ensemble de corrélation en calculant la valeur absolue du produit intérieur de l'ensemble de valeurs de signaux pour le symbole précédent et l'ensemble de valeurs de signaux pour le symbole actuel en réponse à l'ensemble de corrélation déterminé.

4. Procédé de la revendication 1 ou 2, selon lequel l'étape qui consiste à générer un résultat d'ensemble de corrélation comprend également les étapes qui consistent :

à stocker un ensemble de valeurs de signaux pour le symbole précédent, chaque valeur de signal étant générée par la multiplication d'un signal dans une sous-porteuse par la valeur de pilote connue prédéterminée correspondante, et la sous-porteuse est l'une des positions des pilotes et des supports de données ;

à générer un ensemble de valeurs de signaux pour le symbole actuel, chaque valeur de signal étant générée par la multiplication d'un signal dans une sous-porteuse par la valeur de pilote connue prédéterminée correspondante, et la sous-porteuse est l'une des positions des pilotes et des supports de données ; et

à générer le résultat d'ensemble de corrélation en calculant la valeur absolue de la part réelle du produit intérieur de l'ensemble de valeurs de signaux pour le symbole précédent et l'ensemble de valeurs de signaux pour le symbole actuel en réponse à l'ensemble de corrélation déterminé.

5. Procédé de l'une quelconque des revendications 1 à 4, comprenant également l'étape qui consiste à déterminer un maximum de résultats d'ensemble de corrélation quand plusieurs résultats d'ensemble de corrélation sont générés.

6. Procédé de la revendication 5, selon lequel les positions des pilotes du symbole actuel sont déterminées comme modèle de sous-position correspondant à l'ensemble de corrélation avec le résultat d'ensemble de corrélation maximum.

7. Procédé de l'une quelconque des revendications 1 à 4, comprenant également les étapes qui consistent :

à fixer une valeur seuil ; et
à déterminer si le résultat d'ensemble de corrélation est supérieur à la valeur seuil.

8. Procédé de la revendication 7, selon lequel les positions des pilotes du symbole actuel sont déterminées comme modèle de sous-position correspondant à l'ensemble de corrélation, le résultat d'ensemble de corrélation étant supérieur à la valeur seuil.

9. Appareil pour synchroniser des pilotes dispersés contenus dans des symboles reçus par un récepteur dans un système de transmission à porteuses multiples, les pilotes dispersés ayant des valeurs connues prédéterminées, étant pris comme postulats parmi des supports de données et ayant un modèle de position prédéterminé, par ses dimensions de temps et de fréquence, le modèle de position prédéterminé comprenant un nombre fini de modèles de sous-position correspondant chacun à des positions de pilotes dispersés contenus dans l'un des symboles, l'appareil comprenant :

   un compensateur de pilotes et un sélecteur de signaux (630) pour déterminer l'ensemble ou les ensembles de corrélation (501, 502, 503, 504) entre deux sous-porteuses de deux symboles en réponse aux modèles de sous-position ;
   un corrélateur (660A, 660B, 660C, 660D) pour générer un résultat d'ensemble de corrélation pour chaque ensemble de corrélation (501, 502, 503, 504) ; et
   une unité de traitement (670) pour déterminer des positions des pilotes en réponse au résultat d'ensemble de corrélation ;
   **caractérisé en ce que** chaque ensemble de corrélation (501, 502, 503, 504) est déterminé à la fois dans les dimensions de temps et de fréquence entre deux sous-porteuses de deux symboles adjacents.

10. Appareil de la revendication 9, dans lequel le compensateur de pilotes (630) comprend un multiplicateur pour générer une valeur de signal qui est le produit d'un signal dans une sous-porteuse d'un symbole multiplié par la valeur de pilote connue prédéterminée correspondante, et la sous-porteuse est l'une des positions de pilotes et des supports de données.

11. Appareil de la revendication 10, dans lequel le sélecteur de signaux (630) comprend un tampon pour stocker un ensemble de valeurs de signaux pour le symbole précédent et un ensemble de valeurs de signaux pour le symbole actuel.

12. Appareil de la revendication 11, dans lequel le corrélateur (660A, 660B, 660C, 660D) comprend :

   une unité de conjugué complexe pour générer des conjugués de l'ensemble de valeurs de signaux pour le symbole précédent ;
   un multiplicateur complexe pour générer des produits du conjugué de l'ensemble de valeurs de signaux pour le symbole précédent et de l'ensemble de valeurs de signaux pour le symbole actuel ; et
   un accumulateur pour générer le résultat d'ensemble de corrélation en accumulant les produits en réponse à l'ensemble de corrélation et en prenant ensuite la valeur absolue du résultat d'accumulation.

13. Appareil de la revendication 11, dans lequel le corrélateur (660A, 660B, 660C, 660D) comprend :

   un multiplicateur réel pour générer des produits de parties réelles de l'ensemble de valeurs de signaux pour le symbole précédent et de parties réelles de l'ensemble de valeurs de signaux pour le symbole actuel ;
   un multiplicateur réel pour générer des produits imaginaires de parties imaginaires de l'ensemble de valeurs de signaux pour le symbole précédent et de parties imaginaires de l'ensemble de valeurs de signaux pour le symbole actuel ; et
   un accumulateur pour générer le résultat d'ensemble de corrélation en accumulant les produits de parties réelles et les produits de parties imaginaires en réponse à l'ensemble de corrélation, et en prenant ensuite la valeur absolue du résultat d'accumulation.

14. Appareil de l'une quelconque des revendications 9 à 13, dans lequel l'unité de traitement (670) comprend un comparateur pour déterminer un maximum des résultats d'ensemble de corrélation quand plusieurs résultats d'ensemble de corrélation sont générés.

15. Appareil de la revendication 14, dans lequel les positions des pilotes du symbole actuel sont déterminées par l'unité de traitement comme modèle de sous-position correspondant à l'ensemble de corrélation avec le résultat d'ensemble de corrélation maximum.

16. Appareil de l'une quelconque des revendications 9 à 13, dans lequel l'unité de traitement (670) comprend un détecteur de seuil pour déterminer si l'ensemble de corrélation est supérieur à un seuil prédéterminé.

17. Appareil de la revendication 16, dans lequel les positions des pilotes du symbole actuel sont déterminées par l'unité de traitement (670) comme le modèle de sous-position correspondant à l'ensemble de corrélation, le résultat d'ensemble de corrélation étant supérieur au seuil prédéterminé.

**FIGURE 1 (PRIOR ART)**

EP 1 650 921 B1

Synchronization Sequence

20

Pre-FFT Synchronization 21

Post-FFT Synchronization 22

TPS Synchronization 23

Channel Estimation 24

FIGURE 2 (PRIOR ART)

300

Frequency-dimension

$K_{min} = 0$

$K_{max} = 1704$ for 2K mode
$K_{max} = 3408$ for 4K mode
$K_{max} = 6816$ for 8K mode

Time-dimension

Symbol $l-4$
Symbol $l-3$
Symbol $l-2$
Symbol $l-1$
Symbol $l$
Symbol $l+1$
Symbol $l+2$
Symbol $l+3$

TPS Pilots and Continual Pilots between $K_{min}$ and $K_{max}$ are not indicated

● Scattered Pilot
○ Data Carrier

Correlation Set 1          Correlation Set 2          Correlation Set 3          Correlation Set 4
$T_1(l)$                        $T_2(l)$                        $T_3(l)$                        $T_4(l)$

FIGURE 3 (PRIOR ART)

EP 1 650 921 B1

400

**Frequency-dimension**

$K_{max}$ = 1704 for 2K mode
$K_{max}$ = 3408 for 4K mode
$K_{max}$ = 6816 for 8K mode

$K_{min}$ = 0

**Time-dimension**

Symbol $l$
Symbol $l+1$
Symbol $l+2$
Symbol $l+3$
Symbol $l+4$
Symbol $l+5$
Symbol $l+6$
Symbol $l+7$

TPS Pilots and Continual Pilots between $K_{min}$ and $K_{max}$ are not indicated

● Scattered Pilot
○ Data Carrier

⬡
Power Estimation
Set 1
$E_1(l)$

▢
Power Estimation
Set 2
$E_2(l)$

△
Power Estimation
Set 3
$E_3(l)$

◇
Power Estimation
Set 4
$E_4(l)$

**FIGURE 4 (PRIOR ART)**

FIGURE 5 (EMBODIMENT A OF TIME-FREQUENCY CORRELATION-BASED SCHEME)

FIGURE 6

FIGURE 7A

FIGURE 7B

800

**Frequency-dimension**

$K_{max} = 1704$ for 2K mode
$K_{max} = 3408$ for 4K mode
$K_{max} = 6816$ for 8K mode

$K_{min} = 0$

Symbol $l-1$
Symbol $l$
Symbol $l+1$
Symbol $l+2$
Symbol $l+3$
Symbol $l+4$
Symbol $l+5$
Symbol $l+6$

**Time-dimension**

TPS Pilots and Continual Pilots between $K_{min}$ and $K_{max}$ are not indicated

● Scattered Pilot

○ Data Carrier

Correlation Set 1

$$C_1(l)$$

501

FIGURE 8 (EMBODIMENT B OF TIME-FREQUENCY CORRELATION-BASED SCHEME)

EP 1 650 921 B1

900

Frequency-dimension

$K_{max}$ = 1704 for 2K mode
$K_{max}$ = 3408 for 4K mode
$K_{max}$ = 6816 for 8K mode

$K_{min}$ = 0

Symbol $l$
Symbol $l+1$
Symbol $l+2$
Symbol $l+3$
Symbol $l+4$
Symbol $l+5$
Symbol $l+6$
Symbol $l+7$

TPS Pilots and Continual Pilots between $K_{min}$ and $K_{max}$ are not indicated

● Scattered Pilot
○ Data Carrier

Correlation Set 1   Correlation Set 2   Correlation Set 3   Correlation Set 4

$$F_1(l)$$   $$F_2(l)$$   $$F_3(l)$$   $$F_4(l)$$

901   902   903   904

FIGURE 9 (EMBODIMENT A of FREQUENCY CORRELATION-BASED SCHEME)

EP 1 650 921 B1

**FIGURE 10**

FIGURE 11 (EMBODIMENT B of FREQUENCY CORRELATION-BASED SCHEME)

1200

**Synchronization Sequence**

| Pre-FFT Synchronization | | Post-FFT Synchronization | | Frequency or Time-frequency Correlation Based SPPs Identification | | Channel Estimation |

1201      1202      1203      1204

**FIGURE 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **L. Schwoerer.** Fast Pilot Synchronization Schemes for DVB-H. *Proc. Wireless and Optical Communications,* 2004, 420-424